# EUROPÄISCHE PATENTANMELDUNG

(11) **EP 1 324 079 A2**
(43) Veröffentlichungstag der Anmeldung: **02.07.2003**
(21) Anmeldenummer: 02027179.7
(22) Anmeldetag: 05.12.2002
(51) Int. Cl.: G02B 5/10, G02B 26/08

(54) **Verformbarer Spiegel**

(30) Priorität: 12.12.2001 DE 10160893
(71) Anmelder: Diehl Munitionssysteme GmbH & Co. KG, 90552 Röthenbach (DE)
(72) Erfinder: Bär, Klaus, 91207 Lauf (DE); Warm, Berndt, Dr., 90571 Schwaig (DE)
(74) Vertreter: Stammler, Wolfgang, Dipl.-Phys.

(57) **Zusammenfassung**

Ein verformbarer Spiegel (10) mit wenigstens quasi-kontinuierlich deformierbarer optisch wirksamer Oberfläche (12) weist eine fliegend gelagerte Spiegelplatte (11) auf, die längs ihres Randes von einem Teil der Stellglieder (14.1) positioniert wird, wogegen der andere Teil der Stellglieder (14.2) die Spiegelplatte (11) zum Zwecke einer Wellenfrontkorrektur lokal individuell deformiert. Dabei sind alle Stellglieder (14.1, 14.2) mit einem mit einer Sollbiegestelle (Einschnürung (25)) ausgestattetem Kupplungsstück (18) an der Rückseite (13) der Spiegelplatte (11) befestigt.

## Beschreibung

Die Erfindung betrifft einen verformbaren Spiegel gemäß dem Oberbegriff des Anspruchs 1.

Ein gattungsgemäßer Spiegel ist aus der DE 35 02 025 bekannt. An der Rückseite dieses Spiegels sind Zapfen angeformt, die einen punktförmigen Angriff für Stellglieder ermöglichen. Diese Zapfen sind mit den Stellgliedern dauerhaft über eine Hülse verbunden, die eine Längenänderung des Stellglieds durch Hub oder Zug auf die Spiegelplatte überträgt. Die Spiegelplatte selbst ist über eine umlaufende Gummidichtung in einem Stirnflansch eines Hohlzylinders gehaltert. Dieser Hohlzylinder trägt rückwärtig ein Widerlager für die Stellglieder.

Diese Konfiguration hat sich grundsätzlich bewährt, um Phasenunterschiede einer einfallenden Wellenfront auszugleichen. Als in der Praxis nachteilig für die Justageerfordernisse hat sich jedoch die elastische Befestigung der Spiegelplatte am Gehäuse herausgestellt. So kann es, da die Stellglieder zwischen Spiegelplatte und Wiederlager einzuspannen sind, zu einer lokalen Verformung der Spiegelplatte kommen, die dabei partiell aus der Nulllage bzw. dem Arbeitspunkt heraus verschoben wird. Infolge dessen mangelt es besagtem Aufbau dann an einer planen Spiegelfläche als Referenz für Korrekturen.

In Erkenntnis dieser Gegebenheiten liegt vorliegender Erfindung deshalb die technische Problemstellung zugrunde, einen verformbaren Spiegel gattungsgemäßer Art zu schaffen, dessen Spiegelplatte so gelagert ist, dass sie mit ihrer vorgegebenen Planheit auf einen Arbeitspunkt einstellbar ist, um den herum dann lokale Aussteuerungen erfolgen.

Diese Aufgabe ist erfindungsgemäß durch die im Hauptanspruch angegebenen wesentlichen Merkmale gelöst. Danach besteht der erfindungsgemäß ausgelegte verformbare Spiegel aus einer deformierbaren Spiegelplatte vor einem Gehäuse, wobei die optisch wirksame Oberfläche der Spiegelplatte dem Gehäuse abgewandt ist. Gehäuseseitig hinter der optisch wirksamen Oberfläche greift eine Gruppe von elektrisch ansteuerbaren Stellgliedern an der Rückseite längs des Randes der Spiegelplatte an und haltert diese kontaktfrei zum Gehäuse vor dessen offener Stirnfläche. Dafür sind wenigstens drei nicht auf einer Linie befindliche Stellglieder längs des Randes der Spiegelplatte angeordnet, die mittels elektrischer Ansteuerung die Lage der Spiegelplatte im Raum verändern können. Neben diesen als Halter und für die Arbeitspunkteinstellung fungierenden Stellgliedern längs des Randes ist eine Gruppe von Stellgliedern über die Rückseite der Spiegelplatte verteilt angeordnet, mit denen die Deformation der Spiegelplatte am jeweiligen Ort durchführbar ist, nämlich um die stationäre Längenvorgabe des Stellglieds herum nach außen oder innen.

Ein Kupplungsstück vor jedem Stellglied ist mit diesem sowie mit seinem dem Stellglied abgewandten Ende an der Rückseite des Spiegels dauerhaft fest verbunden, z. B. verklebt. Bevorzugt sind die Stellglieder aus piezo-keramischem Material in Ringform zu Säulen gestapelt. Um eine kontinuierliche Deformation der Spiegelplatte zu erzielen, weisen die vorderen Kupplungsstücke jeweils eine Einschnürung auf, die als Sollbiegestelle wirkt und somit einen krassen stufigen Übergang der Spiegelplatte zwischen den Auslenkungen benachbarter Stellglieder verhindert.

Weiterhin ist an jedem Stellglied rückwärtig ein Halterungsstück ebenfalls dauerhaft angebracht, welches mit einem Innengewinde versehen ist. Mittels einer Schraube kann jeweils ein Stellglied an einem Basisbauteil befestigt werden, welches den hinteren Abschluss des Gehäuses darstellt, vor dessen Vorderseite die Spiegelplatte angeordnet ist. Dieses Basisbauteil weist neben Halterungslöchern für die Schrauben gleich viele Durchgangslöcher für Ansteuerungskabel zu den Stellgliedern auf. Zur Befestigung eines jeden Stellglieds auf dem Basisbauteil, dem in der optischen Konstruktionstechnik sogenannten Tubus, greift eine Schraube mit ihrem Schaft durch ein Halterungsloch hindurch und in das Innengewinde vom Halterungsstück hinein, so dass das Basisbauteil zwischen rückwärtigem Schraubenkopf und davor gelegenem Halterungsstück axial eingespannt ist. So ist das Stellglied vor dem Basisbauteil gehaltert.

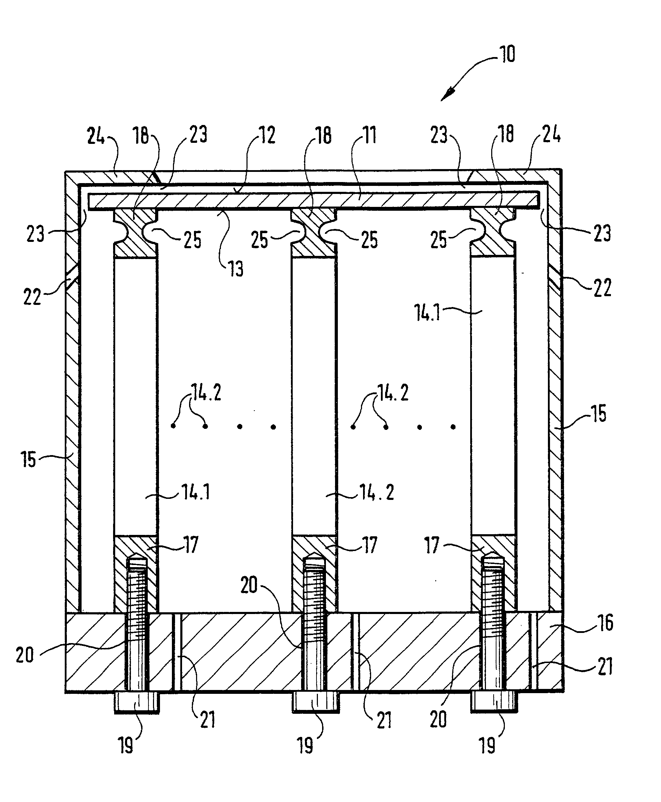

Zusätzliche Weiterbildungen und weitere Merkmale und Vorteile der Erfindung ergeben sich aus den weiteren Ansprüchen und aus nachstehender Beschreibung eines in der Zeichnung unter Beschränkung auf das wesentliche stark abstrahiert und nicht ganz maßstabsgerecht skizzierten bevorzugten Realisierungsbeispiels zur erfindungsgemäßen Lösung. Die einzige Figur der Zeichnung zeigt einen deformierbaren Spiegel im Axial-Längsschnitt durch sein Gehäuse.

Der in der Zeichnung dargestellte, verformbare Spiegel 10 weist eine quasi-kontinuierlich deformierbare Spiegelplatte 11 mit optisch wirksamer Oberfläche 12 auf. An einer Rückseite 13 der Spiegelplatte 11 greifen zwei Gruppen von mehreren elektrisch ansteuerbaren Stellgliedern 14.1 bzw. 14.2 an. Das einzelne Stellglied 14.2 bzw. die zwei Stellglieder 14.1, die in der Zeichnung dargestellt sind, stehen stellvertretend für eine Vielzahl von Stellgliedern 14.1 bzw. 14.2. Die Gruppen der Stellglieder 14.1 und 14.2 sind von einem als Hohlzylinder ausgebildeten Gehäuse 15 zu Schutzzwecken umgeben. Eine der Stirnflächen des Gehäuses 15 ruht auf einem aus einer massiven Platte gebildeten Basisbauteil 16, dem sogenannten Tubus. Vor der gegenüberliegenden offenen Stirnfläche des Gehäuses 15 ist die Spiegelplatte 11 distanziert zum Gehäuse 15 gehaltert. Spiegelplatte 11 und Gehäuse 15 sind dadurch voneinander durch einen dünnen umlaufenden Schlitz 23 getrennt, der sich weiter zwischen Spiegelplatte 11 und davor gelegener gehäusefester Blende 24 erstreckt (wie in der Zeichnung oben links und oben rechts ersichtlich).

In einer besonders vorteilhaften Ausführungsform ist die Spiegelplatte 11 als Verbundplatte, bestehend aus im wesentlichen Kupfer, circa 2% Nickel und etwas Silizium gefertigt. Die verwendete Cu-Ni-Si-Legierung hat den Vorteil, dass einerseits die gute Wärmeleitfähigkeit in der Spiegelplatte 11 und andererseits eine mechanisch festere Struktur als bei herkömmlichem "Lasermessing" gewährleistet ist, wodurch eine höhere Dauerfestigkeit der Spiegelplatte 11 gegen ihre örtliche Schwingungsbeanspruchung erzielt wird.

In besonders vorteilhafter Weise wird die optisch wirksame Oberfläche 12 durch eine galvanische Beschichtung der Spiegelplatte 11 mit Kupfer aufgetragen, die einfach durch Fräsen bearbeitbar ist, was für die Verbundplatte selbst nicht zutrifft.

Mit den Stellgliedern 14.1 und 14.2 ist also jeweils ein hinteres Halterungsstück 17, das auf dem Basisbauteil 16 aufsitzt, und ein vorderes Kupplungsstück 18 dauerhaft verbunden, bevorzugt verklebt. Zur Vermeidung von unterschiedlichem Temperaturausdehnungsverhalten von Gehäuse 15, Basisbauteil 16, vorderem Kupplungsstück 18 und Halterungsstück 17 und damit von im Spiegel 10 entstehenden Spannungen, die zu einem Verwerfen der Spiegelfläche führen würden, sind besagte Bauteile aus dem identischen Cu-Ni-Si-Werkstoff wie die Spiegelplatte 11 gefertigt. An der Rückseite 13 der Spiegelplatte 11 sind die vorderen Kupplungsstücke 18 wie schon erwähnt ebenfalls dauerhaft mit dieser verbunden, so dass die Spiegelplatte 11 selbst von den Stellgliedern 14.1 mittels der daran befestigten vorderen Kupplungstücke 18 getragen bzw. im Bereich der Öffnung des Gehäuses 15 gehaltert ist. Es ist vorgesehen, dass wenigstens drei Stellglieder 14.1, die längs eines Ringes im Randbereich der Spiegelplatte 11 der Blende 24 gegenüber angeordnet sind, ausschließlich für deren Halterung und Grundeinstellung genutzt werden. Mit diesen als Halter fungierenden Stellgliedern 14.1 wird die eine plane Fläche bildende Spiegelplatte 11 z. B. senkrecht zur Gehäusewand 15 und damit parallel zur Basisplatte 16 eingestellt, und zwar so, dass sich deren stationäre Einstellung z. B. bei 50% des Maximalhubs der Stellglieder 14.1 befindet. Dabei hat die Spiegelplatte 11 keinerlei Kontakt zu dem Gehäuse 15 und der Blende 24, wodurch einerseits eine thermische Abkopplung der Spiegelplatte 11 vom Gehäuse 15 erfolgt und andererseits vermieden wird, dass auf das Gehäuse 15 einwirkende mechanische Spannungen auf die spannungssensitive Spiegelplatte 11 übertragen werden. Die besagten Stellglieder 14.1 halten die Spiegelplatte 11 während des Betriebs des Spiegels 10 unveränderlich in der eingestellten Position als dem Arbeitspunkt. Dabei ist der Randbereich durch eine, die Seite der optisch wirksamen Oberfläche 12 ringförmig übergreifende, Blende 24 bestimmt.

Im Gegensatz zu den sich im Randbereich befindlichen Stellgliedern 14.1, die ihre Länge bei Betrieb des Spiegels konstant beibehalten, werden mit den sich im Zentrum der Spiegelplatte 11 befindlichen Stellgliedern 14.2 Phasenunterschiede der auf die optisch wirksame Oberfläche 12 einfallenden Wellenfront lokal ausgeglichen, was durch individuelles Ansteuern zum Verlängern bzw. Verkürzen der Stellglieder 14.2 und damit eine lokale Deformation der Spiegelplatte 11 realisiert wird. Dafür sind die Stellglieder 14.2 über ihren Kupplungsstücken 18 an der Spiegelrückseite 13 dauerhaft befestigt, beispielsweise verklebt.

Die Spiegelplatte 11 ist also mittels der Randgruppe 14.1 auf 50% Maximalhub eingestellt, und die Stellglieder 14.2 erfahren ebenfalls zunächst diese Grundansteuerung von 50%, damit die Spiegelplatte 11 zunächst noch eben ist. Dann erfolgt eine lokale Verformung durch stärkere oder schwächere Ansteuerung des jeweiligen Stellglieds 14.2 um jene Grundeinstellung herum, um die optisch wirksame Oberfläche 12 lokal konvex oder konkav zu verformen.

In ihrer bevorzugten Ausführungsform sind die Stellglieder 14.1 und 14.2 aus Ringen aus piezo-keramischem Material gestapelt. Wird aufgrund einer Längenänderung eines Stellglieds 14.2 Zug oder Druck auf die Spiegelplatte 11 ausgeübt und diese dadurch lokal deformiert, wirkt dann die Spiegelplatte 11 infolge ihrer lokalen Verkrümmung mit einem Drehmoment auf das Stellglied 14.2 zurück, was dazu führen kann, dass dieses verbogen wird und dann aufgrund der innerhalb der Keramik wirkenden Biegekräfte bricht. Um die von der Spiegelplatte 11 auf die Stellglieder 14.2 bzw. 14.1 wirkenden Biegekräfte abzufangen und diese dadurch deren Bruch vermeiden, weisen die vorderen Kupplungsstücke 18 Einschnürungen 25 auf, die als Sollbiegestellen fungieren. Durch ihr Verbiegen absorbieren die vorderen Kupplungsstücke 18 die sonst auf die Stellglieder 14.1 bzw. 14.2 wirkenden Biegekräfte und verhindern so eine Zerstörung der als Piezo-Säule ausgebildeten Stellglieder 14.1 bzw. 14.2. Damit bewirkt die in den vorderen Kupplungsstücken 18 eingebrachte Einschnürung 25 zugleich, dass zwischen unterschiedlichen Hubhöhen benachbarter Stellglieder 14.2 ein kontinuierlicher Übergang in der optisch wirksame Oberfläche 12 erfolgt.

An der, der Spiegelplatte 11 abgewandten, Seite der Stellglieder 14.1 und 14.2 sind diese jeweils mit einem hinteren Halterungsstück 17 dauerhaft verbunden, vorzugsweise ebenfalls verklebt. Zu Befestigungszwecken weisen die hinteren Halterungsstücke 17 Innengewinde auf. Mittels Schrauben 19, deren Schäfte durch Halterungslöcher 20 in dem Basisbauteil 16 hindurchgreifen, werden die hinteren Kupplungsstücke 17 und damit auch die Stellglieder 14.1 bzw. 14.2 an dem Basisbauteil 16 befestigt, indem die Halterungsstücke 17 auf der gegenüberliegenden Seite des Basisbauteils 16 gegen die Köpfe der Schrauben 19 axial verspannt sind. Neben jedem Halterungsloch 20 befindet sich ein Durchführungsloch 21, durch das die (nicht eingezeichneten) Steuerleitungen eines jeden Stellgliedes 14.1 bzw. 14.2 durchgeführt werden.

Um die, bei Beanspruchung der optisch wirksamen Oberfläche 12 des Spiegels 10 mit einem Hochenergielaser auf die Spiegelplatte 11 eingebrachte Energie besser abzuführen, kann der verformbare Spiegel 10 gekühlt werden. Hierfür ist ein besonders vorteilhaftes Zweikreiskühlsystem vorgesehen. Ein erster Kühlkreis wird dabei durch das Basisbauteil 16 und das Gehäuse 15 gebildet, die mit einem gängigen Kältereservoir (nicht eingezeichnet) gekoppelt sind. Das Gehäuse 15, jedenfalls sein Basisbauteil 16, sind dafür mit Kanälen durchzogen oder von anliegenden Fluidleitungen umgeben, die vom Kühlmedium durchströmt werden. Gleichzeitig kann das Basisbauteil 16 durch den zweiten Kühlkreis "von unten", nämlich von ausserhalb des Gehäuses 15 mit Kühlgas wie z. B. Stickstoff beaufschlagt werden. Das Kühlgas verliert beim Kontakt der Gasmolekühle mit dem Basisbauteil 16 thermische Energie und dringt durch die Durchführungslöcher 21 in den die Stellglieder beherbergenden Innenraum des Gehäuses 15 ein. Bei steter Gaszufuhr, durch die in dem Basisbauteil 16 gleichmäßig verteilten Durchführungslöcher 21, füllt sich der Innenraum des Gehäuses 15 mit Kühlgas, das die vom Laserstrahl in die Spiegelplatte 11 eingebrachte thermische Energie absorbiert.

Im Gehäuse 15 sind mehrere Hauptausblasöffnungen 22 vorgesehen, durch die das sich mit Überdruck im Innenraum befindliche Kühlgas entweichen kann. Die Hauptausblasöffnungen 22 sind so im Gehäuse 15 orientiert, dass das entweichende Gas von der Spiegelplatte 11 weg gelenkt wird, so dass der auf der optisch wirksamen Oberfläche 12 reflektierte Laserstrahl nicht von dem Gasstrom beeinflusst wird.

Wie oben beschrieben, ist die Spiegelplatte 11 so gehaltert, dass diese keinen mechanischen Kontakt mit dem Gehäuse 15 und der Blende 24 aufweist. Es ist jedoch vorgesehen, dass zwischen Spiegelplatte 11 und Gehäuse 15 bzw. Blende 24 ein geringer Abstand besteht, so dass sich ein dünner Ausblaseschlitz 23 zwischen der Spiegelplatte 11 und der Blende 24 des Gehäuses 15 bildet. Durch diesen Ausblaseschlitz 23 wird Kühlgas in kleinen Mengen aus dem Innenraum des Gehäuses 15 an der Blende 24 vorbei ausgeblasen und im übrigen ein Überdruckpolster im Schlitz 23 aufgebaut, durch das vermieden wird, dass kleine Fremdkörper an der Blende 24 vorbei in den Innenraum des Gehäuses 15 eindringen. Gleichzeitig bleibt sichergestellt, dass die Spiegelplatte 11 vom thermischen Verhalten des Gehäuses 15 sowie von auf dieses einwirkenden mechanischen Spannungen abgekoppelt ist.

So weist erfindungsgemäß ein verformbarer Spiegel 10 mit wenigstens quasi-kontinuierlich deformierbarer optisch wirksamer Oberfläche 12 eine fliegend gelagerte Spiegelplatte 11 auf, die längs ihres Randes von einem Teil der Stellglieder 14.1 positioniert wird, wogegen der andere Teil der Stellglieder 14.2 die Spiegelplatte 11 zum Zwecke einer Wellenfrontkorrektur lokal individuell deformiert. Dabei sind alle Stellglieder 14.1, 14.2 mit einem mit einer Sollbiegestelle (Einschnürung 25) ausgestattetem Kupplungsstück 18 an der Rückseite 13 der Spiegelplatte 11 befestigt.

## Patentansprüche

1. Verformbarer Spiegel (10) mit wenigstens quasi-kontinuierlich deformierbarer optisch wirksamer Oberfläche (12) und mehreren, hinter seiner Oberfläche (12) angreifenden, in einem Gehäuse (15) angeordneten, elektrisch ansteuerbaren Stellgliedern (14.1, 14.2),
**dadurch gekennzeichnet,**
**dass** die Spiegelplatte (11) kontaktfrei bei einer offenen Stirnfläche des Gehäuses (15) längs ihres Randes von einer Gruppe von wenigstens drei Stellgliedern (14.1) gehaltert ist.

2. Spiegel nach Anspruch 1,
**dadurch gekennzeichnet,**
**dass** zwischen der Rückseite (13) der Spiegelplatte (11) und jedem Stellglied (14.1, 14.2) ein vorderes Kupplungsstück (18) eingefügt und dauerhaft mit beiden verbunden ist.

3. Spiegel nach Anspruch 2,
**dadurch gekennzeichnet,**
**dass** das vordere Kupplungsstück (18) eine Einschnürung (25) als Sollbiegestelle aufweist.

4. Spiegel nach Anspruch 3,
**dadurch gekennzeichnet,**
**dass** jedes Stellglied (14.1, 14.2) dauerhaft mit einem hinteren Haltestück (17) verbunden ist.

5. Spiegel nach Anspruch 4,
**dadurch gekennzeichnet,**
**dass** jedes hintere Haltestück (17) mit einem Innengewinde versehen ist.

6. Spiegel nach einem der vorangehenden Ansprüche,
**dadurch gekennzeichnet,**
**dass** die dauerhaften Verbindungen durch Kleben hergestellt sind.

7. Spiegel nach Anspruch 6,
**dadurch gekennzeichnet,**
**dass** ein Basisbauteil (16) als massive Platte vorgesehen ist, auf der das Gehäuse (15) als Hohlzylinder angeordnet ist und die Haltelöcher (20) aufweist, durch die hindurch Schraubenschäfte in die hinteren Haltestücke (17) eingreifen.

8. Spiegel nach Anspruch 7,
**dadurch gekennzeichnet,**
**dass** die hinteren Haltestücke (17) mittels der Schraubenschäfte gegen Schraubenköpfe auf der gegenüberliegenden Seite des massiven plattenförmigen Basisbauteils (16) axial verspannt sind.

9. Spiegel nach einem der vorangehenden Ansprüche,
**dadurch gekennzeichnet,**
**dass** die Stellglieder (14.1, 14.2) als Piezo-Säulen ausgebildet sind.

10. Spiegel nach einem der vorangehenden Ansprüche,
**dadurch gekennzeichnet,**
**dass** zwischen der Spiegelplatte (11) und dem Gehäuse (15) bzw. seiner ringförmigen Blende (24) ein spaltförmiger Schlitz (23) zum Austritt einer kleinen Menge von in den Innenraum des Gehäuses (15) eingeführtem KühlFluid freigespart ist, das im übrigen durch eine derart gerichtete Öffnung (22) aus dem Gehäuse (15) abgeblasen wird, dass eine Laserstrahlreflektion auf der Spiegeloberfläche (12) vom abgehenden Fluid nicht beeinflusst wird.
